# EUROPÄISCHE PATENTSCHRIFT

(11) **EP 1 890 207 B1**
(45) Veröffentlichungstag und Bekanntmachung des Hinweises auf die Patenterteilung: **30.12.2009**
(21) Anmeldenummer: 06017105.5
(22) Anmeldetag: 17.08.2006
(51) Int. Cl.: G05B 13/04, F23N 5/00

(54) **Verfahren zum Erstellen eines Prozessmodells**
Method of generating a process model
Méthode de réaliser d'un modèle de processus

(43) Veröffentlichungstag der Anmeldung: 20.02.2008
(73) Patentinhaber: Powitec Intelligent Technologies GmbH, 45219 Essen (DE)
(72) Erfinder: Wintrich, Franz, 45309 Essen (DE); Vesper, Thomas, 98693 Ilmenau (DE)
(74) Vertreter: Patentanwälte Hosenthien-Held und Dr. Held

(56) Entgegenhaltungen:
- WO-A-02/077527
- US-A1- 2005 154 477

## Beschreibung

Die Erfindung betritt ein Verfahren zum Erstellen eines Prozessmodells, mit den Merkmalen des Oberbegriffs des Anspruches 1.

Bei einem Verfahren dieser Art, wie es beispielsweise aus der US 2005/0154477 A1 bekannt ist, werden für den Ansatz des neuronalen Netzes die Eingangskanäle empirisch ausgewählt und dann beibehalten, so dass eine statische Topologie vorliegt. Es besteht damit sowohl die Gefahr, dass signifikante Kanäle nicht berücksichtigt werden, als auch dass Rechnerleistung für nicht signifikante Kanäle verbraucht wird.

Der vorliegenden Erfindung liegt die Aufgabe zugrunde, ein Verfahren der eingangs genannten Art dahingehend zu verbessern, dass es automatisiert ablaufen kann. Diese Aufgabe wird durch ein Verfahren mit den Merkmalen des Anspruches 1 gelöst. Weitere vorteilhafte Ausgestaltungen sind Gegenstand der Unteransprüche.

Die Signifikanz eines Eingangskanals wird erfindungsgemäß bestimmt, indem die Vorhersagen auf eine Verschlechterung beim Ausfall des Eingangskanals geprüft werden, wobei der Ausfall mittels des Ersatzes des Eingangskanals durch eine Verteilung, insbesondere in einem typischen Intervall, simuliert wird. Die Signifikanz eines Eingangskanals steht im Kontext des angesetzten und trainierten neuronalen Netzes, so dass ein für ein bestimmtes neuronales Netz als signifikant ermittelter Eingangskanal bei einem anderen Netz nicht signifikant sein kann. Es ist auch häufig so, dass von mehreren theoretisch gleichwertigen Eingangskanälen nur ein Eingangskanal als signifikant ermittelt wird.

Die Erfindung kann bei verschiedenen stationären thermodynamischen Anlagen, insbesondere Kraftwerken, Müllverbrennungsanlagen und Zementwerken, eingesetzt werden.

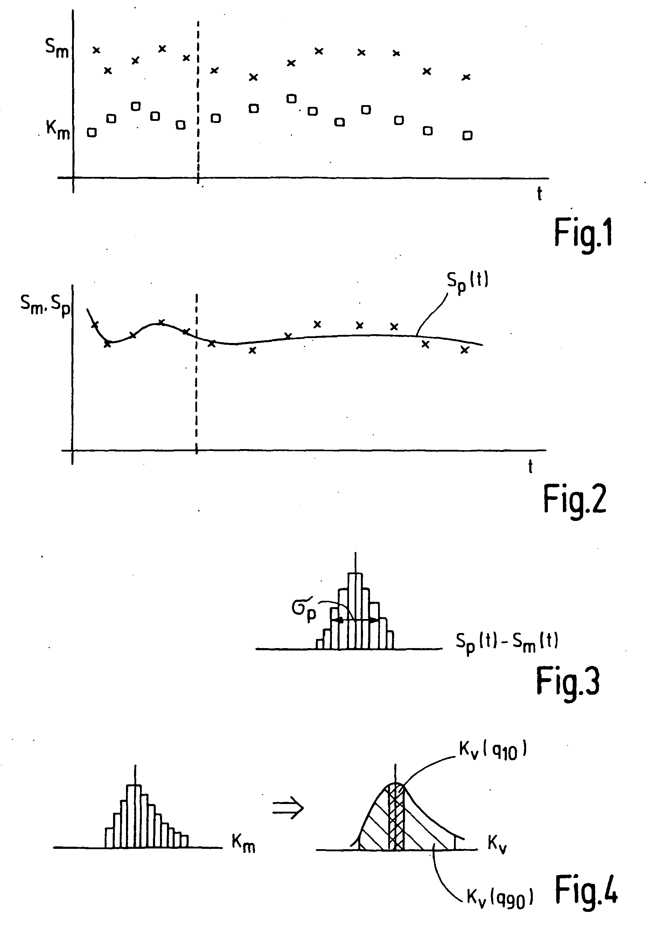

Im folgenden ist die Erfindung anhand eines in der Zeichnung dargestellten Ausführungsbeispiels näher erläutert. Es zeigen
- Fig. 1: eine schematische Darstellung von Messdaten eines Eingangskanals und eines Ausgangskanals,
- Fig. 2: eine schematische Darstellung des Testens eines trainierten Prozessmodells mit dem Vergleich von prognostizierten Werten und Messdaten des Ausgangskanals von Fig. 1,
- Fig. 3: eine schematische Darstellung der Berechnung einer Standardabweichung des prognostizierten Verlaufs von den Messdaten von Fig. 2,
- Fig. 4: das Ersetzen der Messdaten eines Eingangskanals durch eine Verteilung und deren Quantilwerte,

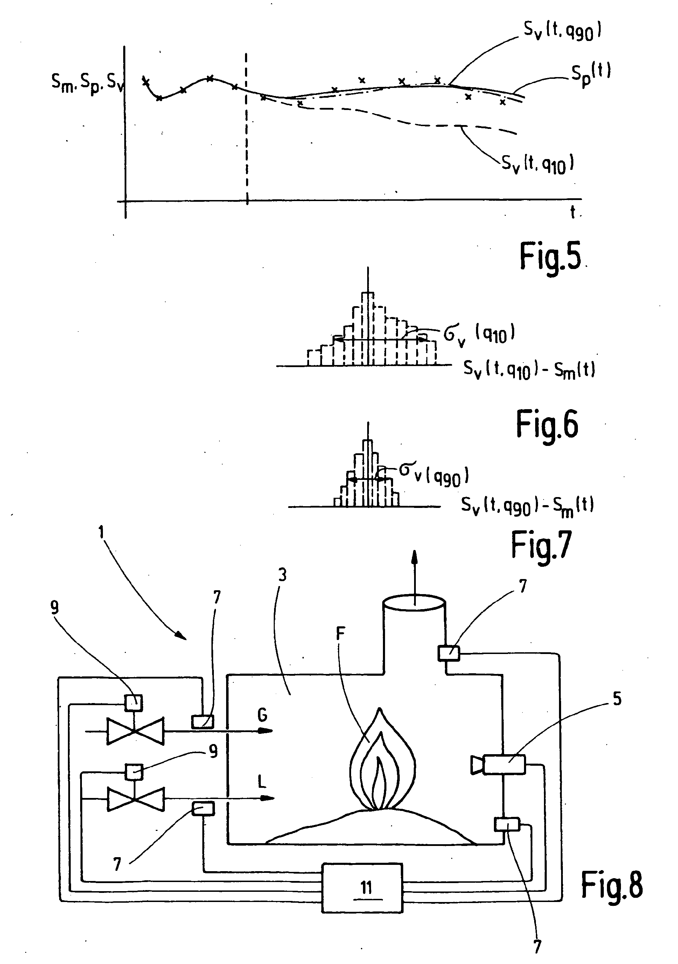

- Fig. 5: eine schematische Darstellung des Vergleichs von mit der Verteilung und den Quantilwerten berechneten Werten des Ausgangskanals und den Werten von Fig. 2,
- Fig. 6: eine schematische Darstellung der Berechnung einer Standardabweichung der unter Verwendung eines kleinen Quantilwertes berechneten Werte des Ausgangskanals,
- Fig. 7: eine schematische Darstellung der Berechnung einer Standardabweichung der unter Verwendung eines kleinen Quantilwertes berechneten Werte des Ausgangskanals, und
- Fig. 8: eine schematische Darstellung eine Anlage.

Eine Anlage 1, beispielsweise ein Kohle-, Öl- oder Gaskraftwerk, eine Müllverbrennungsanlage oder ein Zementwerk, umfasst einen Ofen 3, worunter auch ein Rost verstanden werden soll, wenigstens eine Beobachtungsvorrichtung 5, welche das Innere des Ofens 3 (bzw. den Rost) bildlich erfassen kann, vorzugsweise weitere Sensoren 7, wenigstens eine Stellvorrichtung 9, und einen Rechner 11, an welchen die Beobachtungsvorrichtung(en) 5, weiteren Sensoren 7 und Stellvorrichtung(en) 9 angeschlossen sind.

Dem Ofen 3 wird Brennstoff oder anderes umzusetzendes Material, kurz als Gut G bezeichnet, beispielsweise Kohle, Öl, Gas, Müll, Kalk oder dergleichen, sowie Primärluft (bzw. -Sauerstoff) und Sekundärluft (bzw. -Sauerstoff), kurz als Luft L bezeichnet, zugeführt, wobei diese Zufuhr durch die vom Rechner 11 ansteuerbaren Stellvorrichtungen 9 gesteuert wird. Im Ofen 3 findet ein Verbrennungsprozess statt. Der dadurch erzeugter Flammenkörper F (sowie gegebenenfalls Emissionen der Wände des Ofens 3) wird von den Beobachtungsvorrichtungen 5 laufend erfasst. Die Beobachtungsvorrichtungen 5 umfassen jeweils neben einem die Wand des Ofens 3 durchdringenden optischen Zugang, wie beispielsweise einer Lanze oder einer in der EP 1 621 813 A1 offenbarten Vorrichtung, noch eine Kamera oder dergleichen, welche im optischen Bereich oder benachbarten Bereichen elektromagnetischer Wellen arbeitet. Bevorzugt ist eine zeitlich, örtlich und spektral hochauflösende Kamera, wie sie beispielsweise in der WO 02/070953 A1 beschrieben ist

Die Bilder des Flammenkörpers F (und der eventuellen Emissionen der Wände des Ofens 3) werden im Rechner 11 ausgewertet, beispielsweise nach einem Eigenwert-Verfahren, das in der WO 2004/018940 A1 beschrieben ist. Die aus den Bildern des Flammenkörpers F gewonnenen Daten sowie die Daten der weiteren Sensoren 7, welche beispielsweise die Zufuhr des Gutes G und der Luft L, Schadstoffkonzentrationen in den Abgasen oder die Konzentration des Freikalks (FCAO) messen, werden als Zustandsvariablen s(t) behandelt, die (zeitabhängig) den Zustand des Systems in der Anlage 1 im allgemeinen und des Verbrennungsprozesses im besonderen beschreiben und als Vektor zu betrachten sind.

Durch den Ofen 3 als (Regel-)Strecke, die Beobachtungsvorrichtung(en) 5 und die weiteren Sensoren 7, den Rechner 11 und die Stellvorrichtungen 9 wird ein Regelkreis definiert. Es kann auch ein konventioneller Regelkreis nur mit Ofen 3, Sensoren 7, Rechner 11 und Stellvorrichtungen 9 und ohne die Beobachtungsvorrichtung(en) 5 vorgesehen sein, dessen Regelung nur wenige Zustandsvariablen Sₜ berücksichtigt (d.h. niederdimensional ist) und dann durch die Einbeziehung der Beobachtungsvorrichtung(en) 5 optimiert wird. Das System in der Anlage 1 ist beispielsweise auf bestimmte Soll-Werte oder auf einen stabilen Prozess (d.h. einen ruhigen, quasistationären Betrieb der Anlage 1) hin regelbar. In beiden Fällen werden der durch die Ist-Werte der Zustandsvariablen beschriebene Zustand bewertet und gegebenenfalls geeignete Stellaktionen (Stelleingriffe), kurz als Aktionen bezeichnet, ausgewählt, welche von den Stellvorrichtungen 9 auszuführen sind. Neben der Zufuhr von Gut G und Luft L können weitere Tätigkeiten von Stellvorrichtungen 9 und gegebenenfalls auch eine Probenentnahme eine Aktion in erfindungsgemäßen Sinne sein. Auch Störungen können als ungewollte Aktionen behandelt werden. Es sind einstellbare Kombinationen der beiden vorgenannten Regelungsfälle denkbar, die dann Kompromisse darstellen.

Die Bewertung des Zustandes und die Auswahl der geeigneten Aktionen kann beispielsweise gemäß einem Verfahren erfolgen, wie es in der WO 02/077527 A1 beschrieben ist. Im Rechner 11 ist wenigstens ein neuronales Netz implementiert, welches als ein Prozessmodell die Reaktionen der Zustände des Systems auf Aktionen speichert, also die (nichtlinearen) Verknüpfungen zwischen den Werten der Zustandsvariablen zu einem bestimmten Zeitpunkt und den dann getätigten Aktionen einerseits und den resultierenden Werten der Zustandsvariablen zu einem späteren (d.h. um ein bestimmtes Zeitintervall späteren) Zeitpunkt andererseits, und zwar zu möglichst vielen Zeitpunkten in der Vergangenheit. In diesem Sinne können auch Störungen als (ungewollte) Aktionen in das Prozessmodell einbezogen werden. Eine vom Prozessmodell, d.h. den gespeicherten Verknüpfungen unabhängige, Situationsbewertung, die in der Art einer vereinfachten Güte konzipiert ist, bewertet für einen bestimmten Zeitpunkt die Werte der Zustandsvariablen in Hinblick auf vorgegebene Optimierungsziele, d.h. wie nahe der Zustand des Systems zu diesem Zeitpunkt dem optimalen Zustand ist. Mit einer Bewertung eines - mit dem Prozessmodell in Abhängigkeit von einer bestimmten Aktion - vorhergesagten Zustandes zu einem zukünftigen Zeitpunkt lässt sich die Eignung der bestimmten Aktion zur Annäherung an das Optimierungsziel feststellen.

Zur Verbesserung der Genauigkeit werden nicht nur die Prozessmodelle durch die tatsächlichen Entwicklungen der Zustandsvariablen als Reaktion auf Aktionen laufend ergänzt, sondern es findet ein Wettbewerb mehrerer Prozessmodelle hinsichtlich der Qualität der Vorhersagen statt. Hierzu werden im Hintergrund altemative Prozessmodelle, beispielsweise mit anderen Topologien, erstellt und trainiert, deren Vorhersagen mit dem oder den aktuell verwendeten Prozessmodell(en) verglichen werden, um letztere gegebenenfalls zu ersetzen, wie es beispielsweise in der EP 1 396 770 A1 beschrieben ist.

Ein Prozessmodell, das in Echtzeit zu verwertbaren Vorhersagen kommen soll, berücksichtigt nicht sämtliche zur Verfügung stehenden Zustandsvariablen. Mit dem erfindungsgemäßen Verfahren wird vielmehr festgestellt, welche Zustandsvariablen mit welchen Parametern nötig und gut sind, um ein gutes Prozessmodell auf Basis eines neuronalen Netzes, von einem gegebenen Datensatz zu erstellen. Diese Signifikanz von Zustandsvariablen ist kein absolutes Merkmal dieser Zustandsvariablen, sondern kann immer nur im Kontext mit der Art und Konfiguration des neuronalen Netzes und mit der Gesamtheit aller verwendeten Zustandsvariablen gesehen werden. Wenn also beispielsweise ein RPROP als neuronales Netz verwendet wird, müsste entweder der PROP-Algorithmus Bestandteil der Signfikanzanalyse sein oder ein normal trainiertes Netz einer entsprechenden Untersuchung unterzogen werden. Mit dem erfindungsgemäßen Verfahren werden weder die zahlreichen Möglichkeiten stur durchprobiert noch ein einzelner Trainingsalgorithmus als Kern einer mathematischen Auswertung genommen, die nur für die diesen Trainingsalgorithmus gültig wäre.

In einem ersten Schritt wird als Ansatz ein neuronales Netz eines bestimmten Typs gewählt und eine Konfiguration mit einer mutmaßlich sinnvollen Zusammenstellung von Zustandsvariablen genommen. Zum besseren Verständnis sei angenommen, dass die Zustandsvariablen grob unterschieden werden können zwischen Eingangskanälen K, welche eher die Einwirkungsmöglichkeiten auf den Prozess beschreiben, beispielsweise die Stellgrößen, und Ausgangskanälen S, welche eher die Ergebnisse des Prozesses beschreiben, beispielsweise die Dampfleistung.

In einem zweiten Schritt wird von einem über die Zeit gemessenen Datensatz, kurz als Messdaten Kₘ(t) und Sₘ(t) bezeichnet, ein Teil, beispielsweise die zeitlich ersten 10% der Daten, genommen und damit das neuronale Netz trainiert.

In einem dritten Schritt wird mit den restlichen Messdaten Kₘ(t) und Sₘ(t) das neuronale Netz getestet (evaluiert), d.h. es wird getestet, wie gut durch das neuronale Netz ein Ausgangskanal S in seinem Zeitverlauf Sₚ(t) prognostiziert wird. Die Streuung der prognostizierten Werte Sₚ(t) um die Messdaten Sₘ(t), also ein statistisch mittleres Sₚ(t) - Sₘ(t), ergibt eine bestimmte Zahl, die im folgenden als prognostizierte Standardabweichung σₚ bezeichnet ist.

Nun wird in einem vierten Schritt für jeden Eingangskanal einzeln und abwechselnd die tatsächliche Verteilung der Messdaten Kₘ(t) unter Berücksichtigung zeitlicher Korrelationen - ersetzt durch eine Verteilung Kᵥ von Werten innerhalb eines Intervalls zwischen zwei Quantilwerten qⱼ, d.h. Werten, die einem Flächenanteil unter der Verteilungskurve entsprechen, beispielsweise 10% oder 90% der Fläche, abgekürzt als q₁₀ und q₉₀.

Mit diesen Verteilungen Kᵥ und ihren Intervallen von Quantilwerten qⱼ, wird dann in einem fünften Schritt das neuronale Netz erneut evaluiert, d.h. mit dem neuronalen Netz werden erneut Werte Sᵥ(t, qⱼ) des Ausgangskanals berechnet, und zwar - im Falle der beispielhaften Quantilwerten q₁₀ und q₉₀- stufenweise zunächst nur mit den häufigsten 10% der Werte Kᵥ(q₁₀) dieses Eingangskanals, dann mit etwas mehr Werten Kᵥ(qⱼ) und schließlich mit 90% der Werte Kᵥ(q90), also dem Bereich ohne die Ausläufer der Verteilung Kᵥ. Mit der letzten Berechnung Sᵥ(t, q₉₀) sollten ungefähr die aufgrund der Messdaten Kₘ(t) prognostizierten Sₚ(t) erreicht werden.

Für sämtliche dieser Berechnungen von Sᵥ(t, qⱼ) wird jeweils wieder eine Standardabweichung σᵥ(qⱼ) der berechnete Werte Sᵥ(t, qⱼ) des Ausgangskanals von den zugehörigen Messdaten Sₘ(t) ermittelt, also ein statistisch mittleres Sᵥ(t, qⱼ)- Sₘ(t). Sind diese Standardabweichungen σᵥ(qⱼ) größer als die prognostizierte Standardabweichung σₚ, d.h. weichen die berechneten Werte Sᵥ(t, qⱼ) des Ausgangskanals bei kleinerem qⱼ stärker von den zugehörigen Messdaten Sₘ(t) ab, so ist der durch die Verwendung der Verteilung K ᵥ(qⱼ) geänderte Eingangskanal signifikant für das ausgewählte neuronale Netz.

Das erfindungsgemäße Verfahren bestimmt also die für das gewählte neuronale Netz signifikanten Eingangskanäle anhand einer Verschlechterung der Vorhersagen jeweils nach Ersatz eines Eingangskanals durch Quantilwerte einer Verteilung. Anstelle von mehreren Trainingsläufen und dazu jeweils mehrere Testläufe, wie bei bekannten Verfahren, müssen erfindungsgemäß hierfür nur ein Trainingslauf und eine von der Zahl der Eingangskanäle und der Unterteilung ihrer Verteilung in Quantilwerte abhängige Anzahl von Testläufe durchgeführt werden.

In einem letzten Schritt wird das neuronale Netz so geändert, dass nur noch die signifikanten Eingangskanäle berücksichtigt werden. Dieses so geänderte neuronale Netz kann dann nochmals mit den Messdaten Kₘ(t) und Sₘ(t) trainiert werden.

### Bezugszeichenliste

- 1: Anlage
- 3: Ofen
- 5: Beobachtungsvorrichtung
- 7: Sensor
- 9: Stellvorrichtung
- 11: Rechner
- F: Flammenkörper
- G: Gut
- L: Luft
- Kₘ(t): Eingangskanal, gemessen
- Kᵥ(qⱼ): Eingangskanal gemäß Verteilung und Quantil
- qⱼ: Quantilwert
- q₁₀: Quantilwert 10%
- q₉₀: Quantilwert 90%
- Sₘ(t): Ausgangskanal, gemessen
- Sₚ(t): Ausgangskanal, prognostiziert
- Sᵥ(t,qⱼ): Ausgangskanal, berechnet mit Verteilung und Quantilwert
- σₚ: Standardabweichung, prognostiziert
- σᵥ(qⱼ): Standardabweichung, berechnet mit Verteilung und Quantil

## Patentansprüche

1. Verfahren zum Erstellen eines Prozessmodells für die Regelung eines Verbrennungsprozesses in einer Anlage (1), insbesondere einem Kraftwerk, einer Müllverbrennungsanlage oder einem Zementwerk, in welcher Gut (G) unter Zufuhr von Luft (L) mittels des Verbrennungsprozesses unter Ausbildung wenigstens eines Flammenkörpers (F) umgesetzt wird und der Zustand des Systems in der Anlage (1) durch Zustandsvariablen (K, S) beschrieben wird, wobei in einem ersten Schritt ein neuronales Netz angesetzt, in einem zweiten Schritt das neuronale Netz mit Messdaten (Kₘ(t), Sₘ(t)) der Zustandsvariablen (K, S), welche Messdaten (Kₘ(t)) von Eingangskanälen und Messdaten (Sₘ(t)) wenigstens eines Ausgangskanals umfassen, trainiert wird, und in einem dritten Schritt das neuronale Netz mit weiteren Messdaten (Kₘ(t)) der Eingangskanäle und Messdaten (Sₘ(t)) des Ausgangskanals getestet wird, indem durch das neuronale Netz der Ausgangskanal in seinem Zeitverlauf mit Werten (Sₚ(t)) prognostiziert wird, wobei aus den Abweichungen der prognostizierten Werte (Sₚ(t)) des Ausgangskanals von den Messdaten (Sₘ(t)) des Ausgangskanals eine prognostizierte Standardabweichung (σₚ) ermittelt wird, **dadurch gekennzeichnet, dass** in einem vierten Schritt die Messdaten (Kₘ(t)) wenigstens eines Eingangskanals ersetzt werden durch eine Verteilung (Kᵥ) gemäß einer Verteilungskurve über einem Intervall von Quantilwerten (qⱼ) als Anteile der Verteilung (Kᵥ), die einem Flächenanteil unter Verteilungskurve entsprechen, und dass in einem fünften Schritt mit der Verteilung (Kᵥ) für jeden Quantilwert (qⱼ) erneut Werte (Sᵥ(t, qⱼ)) des Ausgangskanals berechnet und eine Standardabweichung σᵥ(qⱼ) der berechneten Werte (Sᵥ(t, qⱼ)) des Ausgangskanals von den zugehörigen Messdaten (Sₘ(t)) ermittelt wird, wobei im Falle einer Vergrößerung der berechneten Standardabweichung σᵥ(qⱼ) gegenüber der prognostizierten Standardabweichung (σₚ) der Eingangskanal (K) signifikant für das im ersten Schritt angesetzte und im zweiten Schritt trainierte neuronale Netz ist.

2. Verfahren nach Anspruch 1, **dadurch gekennzeichnet, dass** als Grenzen des Intervalls ein kleiner Quantilwert (q₁₀), welcher den Bereich der häufigsten Werte der Verteilung (Kᵥ) abdeckt, und ein großer Quantilwert (q₉₀), welcher den Bereich ohne die Ausläufer der Verteilung (Kᵥ) abdeckt, gewählt werden.

3. Verfahren nach einem der vorhergehenden Ansprüche, **dadurch gekennzeichnet, dass** bei mehreren Eingangskanälen im vierten Schritt für jeden Eingangskanal einzeln und abwechselnd die Messdaten (Kₘ(t)) durch eine Verteilung (Kᵥ) ersetzt werden.

4. Verfahren nach einem der vorhergehenden Ansprüche, **dadurch gekennzeichnet, dass** in einem letzten Schritt das neuronale Netz so geändert wird, dass nur noch die signifikanten Eingangskanäle berücksichtigt werden.

5. Verfahren nach einem der vorhergehenden Ansprüche, **dadurch gekennzeichnet, dass** das Prozessmodell im Hintergrund erstellt wird, während ein aktuell verwendetes Prozessmodell der Regelung des Verbrennungsprozesses in der Anlage (1) dient.

6. Verfahren nach Anspruch 5, **dadurch gekennzeichnet, dass** das erstellte Prozessmodell das aktuell verwendete Prozessmodell ersetzt, wenn die Qualität der Vorhersagen besser ist.

7. Verfahren nach einem der vorhergehenden Ansprüche, **dadurch gekennzeichnet, dass** die Zustandsvariablen (K, S) unter Verwendung wenigstens einer den Flammenkörper (F) bildlich erfassenden Beobachtungsvorrichtung (5) und weiterer Sensoren (7) ermittelt und in einem Rechner (11) bewertet werden, worauf gegebenenfalls geeignete Aktionen auswählt werden, um Stellvorrichtungen (9) für wenigstens die Zufuhr von Gut (G) und/oder Luft (L) anzusteuern.

8. Regelkreis zur Regelung eines Verbrennungsprozesses in einer Anlage (1), insbesondere einem Kraftwerk, einer Müllverbrennungsanlage oder einem Zementwerk, mit einer Strecke (3) zum Umsetzen von Gut (G) unter Zufuhr von Luft (L) mittels des Verbrennungsprozesses unter Ausbildung wenigstens eines Flammenkörpers (F), wenigstens einer den Flammenkörper (F) bildlich erfassenden Beobachtungsvorrichtung (5) und weiterer Sensoren (7) zur Ermittlung der den Zustand des Systems in der Anlage (1) beschreibenden Zustandsvariablen (K, S), einem Rechner (11) zur Bewertung der Zustandsvariablen (K, S) und gegebenenfalls Auswahl geeigneter Aktionen und durch die Aktionen ansteuerbare Stellvorrichtungen (9) für wenigstens die Zufuhr von Gut (G) und/oder Luft (L), wobei der Rechner (11) mit einem Verfahren nach einem der vorhergehenden Ansprüche ein Prozessmodell erstellt.

## Claims

1. A method for developing a process model for regulating a combustion process in a plant (1), in particular a power plant, a waste incineration plant or a cement works, in which, while air (L) is supplied, material (G) is converted by means of the combustion process with at least one flame body (F) being formed, and the state of the system in the plant (1) is described by state variables (K, S), wherein in a first step a neuronal network is set up, in a second step the neuronal network is trained using measurement data (Kₘ(t), Sₘ(t)) of the state variables (K, S), which comprise measurement data (Kₘ(t)) from input channels and measurement data Sₘ(t)) from at least one output channel, and in a third step the neuronal network is tested using further measurement data (Kₘ(t)) from the input channels and measurement data (Sₘ(t)) from the output channel, through the neuronal network predicting the time course of the output channel with values Sₚ(t)), wherein a predicted standard deviation (σₚ) is determined from the deviations of the predicted values (Sₚ(t)) of the output channel from the measurement data (Sₘ(t)) of the output channel, **characterized in that** in a fourth step the measurement data (Kₘ(t)) from at least one input channel are replaced by a distribution (Kᵥ) according to a distribution curve as parts of the distribution (Kᵥ) that correspond to a part of the area below the distribution curve over an interval of quantile values (qⱼ), and **in that** in a fifth step values (Sᵥ(t,qⱼ)) of the output channel are again calculated using the distribution (Kᵥ) for each quantile value (qj), and a standard deviation σᵥ(qⱼ) of the calculated values (Sᵥ(t,qⱼ)) of the output channel is determined from the associated measurement data (Sₘ(t)), wherein the input channel (K), in the case of an increase in the calculated standard deviation σᵥ(qⱼ) from the predicted standard deviation (σₚ), is significant for the neuronal network set up in the first step and trained in the second step.

2. A method according to Claim 1, **characterized in that** a small quantile value (q₁₀), which covers the range of the most frequent values of the distribution (Kᵥ), and a large quantile value (q₉₀), which covers the range without the tails of the distribution (Kᵥ), are selected as the limits of the interval.

3. A method according to one of the preceding claims, **characterized in that**, in the fourth step, in the case of several input channels, for each input channel the measurement data (Kₘ(t)) are replaced by a distribution (Kᵥ) individually and alternatingly.

4. A method according to one of the preceding claims, **characterized** that in a final step the neuronal network is modified in such a way that only the significant input channels are taken into account.

5. A method according to one of the preceding claims, **characterized in that** the process model is developed in the background, while a currently used process model serves to regulate the combustion process in the plant (1).

6. A method according to Claim 5, **characterized in that** the developed process model replaces the currently used process model when the quality of the predictions is better.

7. A method according to one of the preceding claims, **characterized in that** the state variables (K, S) are determined using at least one observation device (5) that images the flame body (F) and using also further sensors (7), and are evaluated in a computer (11), whereupon suitable actions are selected if necessary to control adjustment devices (9) at least for the supply of material (G) and/or air (L).

8. A control loop for regulating a combustion process in a plant (1), in particular a power plant, a waste incineration plant or a cement works, having a controlled system (3) for converting material (G) by means of the combustion process using air (L), with at least one flame body (F) being formed, and having at least one observation device (5) that images the flame body (F), and having further sensors (7) to determine the state variables (K, S) that describe the state of the system in the plant (1), also having a computer (11) to evaluate the state variables (K, S) and, if necessary, to select appropriate actions, and having adjustment devices (9) controllable by the actions for at least the supply of material (G) and/or air (L), the computer (11) developing a process model using a method according to one of the preceding claims.

## Revendications

1. Procédé d'établissement d'un modèle de processus pour la régulation d'un processus de combustion dans une installation (1), en particulier une centrale électrique, une installation d'incinération d'ordures ou une cimenterie, où un matériau (G) est transformé avec apport d'air (L) dans un processus de combustion, avec formation d'au moins un corps de flamme (F), et où l'état du système dans l'installation (1) est décrit par des variables d'état (K, S), dans lequel, dans une première étape, un réseau neuromimétique est créé, dans une deuxième étape, le réseau neuromimétique subit un apprentissage à l'aide de données de mesure (Kₘ(t), Sₘ(t)) des variables d'état (K, S), qui comprennent des données de mesure (Kₘ(t)) de canaux d'entrée et des données de mesure (Sₘ(t)) d'au moins un canal de sortie et, dans une troisième étape, le réseau neuromimétique est testé avec d'autres données de mesure (Kₘ(t)) des canaux d'entrée et d'autres données de mesure (Sₘ(t)) du canal de sortie en fournissant par le réseau neuromimétique un pronostic de l'allure dans le temps des valeurs (Sₚ(t)) du canal de sortie, dans lequel on détermine à partir des écarts entre les valeurs pronostiquées (Sₚ(t)) du canal de sortie et les données de mesure (Sₘ(t)) du canal de sortie un écart-type pronostiqué (σₚ), **caractérisé par le fait que**, dans une quatrième étape, les données de mesure (Kₘ(t)) d'au moins un canal d'entrée sont remplacées par une distribution (Kᵥ), selon une courbe de distribution sur un intervalle, de valeurs quantiles (qⱼ) constituant des quotes-parts de la distribution (Kᵥ) qui correspondent à une quote-part de surface sous la courbe de distribution, et **par le fait que**, dans une cinquième étape, on calcule à nouveau des valeurs (Sᵥ(t, qⱼ)) du canal de sortie avec la distribution (Kᵥ) pour chaque valeur quantile (qⱼ) et on détermine un écart-type σᵥ(qⱼ) entre les valeurs calculées (Sᵥ(t, qⱼ)) du canal de sortie et les données de mesure correspondantes (Sₘ(t)), dans lequel, en cas d'augmentation de l'écart-type calculé σᵥ(qⱼ) par rapport à l'écart-type pronostiqué (σₚ), le canal d'entrée (K) est significatif pour le réseau neuromimétique créé dans la première étape et subissant un apprentissage dans la deuxième étape.

2. Procédé selon la revendication 1, **caractérisé par le fait que** l'on choisit comme limites de l'intervalle une petite valeur quantile (q₁₀) couvrant la zone des valeurs les plus fréquentes de la distribution (Kᵥ) et une grande valeur quantile (q₉₀) couvrant la zone sans les extrémités de la distribution (Kᵥ).

3. Procédé selon l'une des revendications précédentes, **caractérisé par le fait qu'**en présence de plusieurs canaux d'entrée, on remplace dans la quatrième étape, pour chacun des canaux d'entrée, individuellement et tour à tour, les données de mesure (Kₘ(t)) par une distribution (Kᵥ).

4. Procédé selon l'une des revendications précédentes, **caractérisé par le fait que**, dans la dernière étape, le réseau neuromimétique est modifié afin de ne prendre en compte que les canaux d'entrée significatifs.

5. Procédé selon l'une des revendications précédentes, **caractérisé par le fait que** le modèle de processus est établi en arrière-plan alors qu'un modèle de processus actuellement utilisé sert à la régulation du processus de combustion dans l'installation (1).

6. Procédé selon la revendication 5, **caractérisé par le fait que** le modèle de processus établi remplace le modèle de processus actuellement utilisé lorsque la qualité des prévisions est meilleure.

7. Procédé selon l'une des revendications précédentes, **caractérisé par le fait que** les variables d'état (K, S) sont déterminées en utilisant au moins un dispositif d'observation (5) recueillant des images du corps de flamme (K) et d'autres capteurs (7) et sont analysées dans un calculateur (11), après quoi des actions éventuellement adéquates sont sélectionnées pour piloter des dispositifs de commande (9) pour au moins l'alimentation en matériau (G) et/ou en air (L).

8. Circuit de régulation destiné à réguler un processus de combustion dans une installation (1), en particulier une centrale électrique, une installation d'incinération d'ordures ou une cimenterie, avec une ligne (3) de transformation d'un matériau (G) avec apport d'air (L) dans un processus de combustion, avec formation d'au moins un corps de flamme (F), avec au moins un dispositif d'observation (5) recueillant des images du corps de flamme (K) et d'autres capteurs (7) destinés à déterminer les variables d'état (K, S) décrivant l'état du système dans l'installation (1), avec un calculateur (11) destiné à analyser les variables d'état (K, S) et à sélectionner éventuellement des actions appropriées et avec des dispositifs de commande (9) pouvant être pilotés par les actions pour au moins l'alimentation en matériau (G) et/ou en air (L), dans lequel le calculateur établit un modèle de processus à l'aide d'un procédé selon l'une des revendications précédentes.
